# EUROPÄISCHE PATENTSCHRIFT

(11) **EP 3 377 288 B1**
(45) Veröffentlichungstag und Bekanntmachung des Hinweises auf die Patenterteilung: **01.04.2020**
(21) Anmeldenummer: 16790290.7
(22) Anmeldetag: 17.10.2016
(51) Int. Cl.: B29B 9/06, C08G 63/78, F26B 5/16, B29B 9/16

(54) **VERFAHREN ZUR HERSTELLUNG EINES KUNSTSTOFFGRANULATS**
METHOD FOR THE PRODUCTION OF PLASTIC GRANULATES
PROCÉDÉ DE PRODUCTION DE GRANULÉS DE MATIÈRE PLASTIQUE

(30) Priorität: 16.11.2015 DE 102015119787
(43) Veröffentlichungstag der Anmeldung: 26.09.2018
(73) Patentinhaber: Maag Automatik GmbH, 63762 Großostheim (DE)
(72) Erfinder: MÜLLER, Horst, 63849 Leidersbach (DE); DEISS, Stefan, 55296 Harxheim (DE); GLÖCKNER, Frank, Aschaffenburg 63739 (DE); MÜRB, Reinhardt-Karsten, Aschaffenburg 63743 (DE)
(74) Vertreter: Puschmann Borchert Bardehle Patentanwälte Partnerschaft mbB
(86) Internationale Anmeldenummer: PCT/EP2016/074886
(87) Internationale Veröffentlichungsnummer: WO 2017/084821

(56) Entgegenhaltungen:
- EP-A1- 2 433 771
- EP-A1- 2 712 881
- WO-A1-2006/133469
- DE-A1-102006 058 642
- DE-A1-102007 040 135
- DE-B4-102006 027 176
- US-A1- 2009 218 052

## Beschreibung

Die Erfindung betrifft ein Verfahren zur Herstellung eines Kunststoffgranulats gemäß der im Oberbegriff des Patentanspruches 1 angegebenen Art.

DE 10 2007 040 135 A1 betrifft ein Verfahren zur kontinuierlichen Herstellung von Polyester-Granulaten aus hochviskosen Polyester-Schmelzen mit einem Polymerisationsgrad von 132 bis 165. Die hochviskose Schmelze (hiV) wird mittels einer Dosierpumpe, die einen Druck von> 80 bar bis 200 bar aufbauen kann, durch eine beheizte Düsenplatte 3 gepresst (Unterwassergranulierung unter mindestens 1 bar Überdruck mit einer Wassereintrittstemperatur von mindestens 70°C, bevorzugt 80-95°C). Ein eng an dieser laufender Schneidmesserkranz schält die Schmelze von jedem Loch der Düsenplatte ab, wodurch sich runde oder ovale Körner (Pellets) ausbilden, die durch eine intensive Wasserumspülung an der Oberfläche amorph erstarren. Die Wasserkammer steht unter leichtem Überdruck und das Flottenverhältnis beträgt zwischen 8 und 12:1. Das Pellet/Wassergemisch gelangt über eine kurze Rohrleitung und einen Agglomeratabscheider in den Vortrockner, der als Rührzentrifuge ausgebildet ist, wobei die Wasserabscheidung im unteren Bereich stattfindet und die Pellets im oberen Bereich austreten.

EP 2 712 881 A1 offenbart eine Vorrichtung zum kontinuierlichen Pelletisieren und Kristallisieren eines Polymers, die eine Einheit zum Bilden eines Polymerpelletmaterials und eines Kühlpelletmaterials in einem flüssigen Kühlmedium umfasst. Zudem ist eine nachgeschaltete Einheit zum Trocknen von Pelletmaterial und ein Kristallisator zum Kristallisieren von Pelletmaterial vorgesehen. Der Kristallisator kommuniziert direkt über die Verbindungsleitung mit der vorgeschalteten Einheit zum Trennen des flüssigen Kühlmediums vom Pelletmaterial und Trocknen des Pelletmaterials, so dass das zu behandelnde Material ungehindert von der vorgeschalteten Einheit zur nachfolgenden Einheit gelangen kann. Ein Einlass dient zum Importieren von Inertgas. Eine Vorrichtung zum kontinuierlichen Pelletisieren und Kristallisieren eines Polymers umfasst: Eine Einheit zum Bilden eines Polymerpelletmaterials und zum Kühlen des Pelletmaterials in einem flüssigen Kühlmedium; eine nachgeschaltete Einheit zum Trocknen des Pelletmaterials, wobei die nachgeschaltete Einheit eine Austrittsöffnung zum Exportieren von Gas aufweist; und einen Kristallisator zum Kristallisieren des Pelletmaterials. Der Kristallisator kommuniziert direkt über eine Verbindungsleitung mit der vorverbundenen Einheit zum Trennen des flüssigen Kühlmediums vom Pelletmaterial und zum Trocknen des Pelletmaterials, so dass das zu behandelnde Material ungehindert von der vorverbundenen Einheit passieren kann zur nachgeschalteten Einheit; und umfasst einen Einlass zum Einleiten von Inertgas, wobei der Kristallisator über den Einlass mit einem Inertgastank in Verbindung steht, so dass der Druck im Kristallisator relativ zu einem Druck in der Einheit zum Trocknen des Pelletmaterials erhöht werden kann.

Aus der EP 2 361 174 B1 ist ein Verfahren zur Herstellung von Kunststoffgranulat mit hoher Erweichungstemperatur, nämlich über 120°C, bekannt. Solche Kunststoffgranulate können dabei Polycarbonat, Polycarbonatblend, Polystyrol, Hochtemperatur-Thermoplaste sein. Ein Prozessfluid ist dabei in einer Prozesskammer enthalten. Die Prozesskammer ist von einer Lochplatte zur Erzeugung von Strängen aus flüssigem Kunststoff teilweise begrenzt. In der Prozesskammer wirkt eine Zerteilvorrichtung mit der Lochplatte für die aus der Lochplatte austretenden Kunststoffstränge zusammen. Dabei entsteht ein Gemisch aus Prozessfluid und Granulat. Das Prozessfluid hat dabei eine Temperatur von größer als 120°C. In der Prozesskammer herrscht ein Druck von größer als 2 bar. Das Gemisch aus Prozessfluid und Granulat durchläuft unter Aufrechterhaltung des Drucks eine Kühlstrecke. Das Granulat wird dann unter Druck vom Prozessfluid in einer Trennvorrichtung getrennt und über eine Druckschleuse geleitet. Dieses Verfahren hat sich grundsätzlich bewährt. Jedoch ist die Qualität der Kunststoffgranulate für die weitere Verarbeitung für bestimmte Anwendungen weiter zu gering.

Aus der DE 10 2006 027 176 B4 ist ein Verfahren zur Herstellung eines Kunststoffgranulats mit geringem Acetaldehydgehalt aus einer hochviskosen Polyesterschmelze mit einer intrinsischen Viskosität zwischen 0,6 und 1,0 dl/g bekannt. Hierbei wird der Polyesterschmelzstrang unter Wasser bei einer Temperatur von mindestens 90°C zerteilt. Das begleitende Wasser wird anschließend unter möglichst geringer Abkühlung des Kunststoffgranulats vom Kunststoffgranulat getrennt, sodass das Kunststoffgranulat nach Abtrennung des Wassers eine Temperatur von mindestens 130°C aufweist. Das so erhaltene wasserarme Kunststoffgranulat nach der Wasserabtrennung wird in einen Dealdehydisierungsbehälter gegeben und dort mittels eines Spülluftstroms mit einer Eintrittstemperatur zwischen 180°C und 200°C behandelt. Dabei wird das Kunststoffgranulat entweder direkt in den Dealdehydisierungsbehälter gegeben oder mittels einer Dosiereinrichtung. Hierdurch soll das Verfahren apparativ vereinfacht und mit geringeren Betriebskosten betrieben werden. Zudem sollen die besonders hohen Qualitätsansprüche an den Polyester für Verpackungen bezüglich Viskosität, Farbe, Acetaldehydgehalt, Acetaldehydreformation sowie auf Schmelzverhalten beibehalten bzw. verbessert werden. Nachteilig an diesem Verfahren ist auch hier, dass die Qualität des Kunststoffgranulats für bestimmte Anwendungen nicht zufriedenstellend ist.

Aufgabe der Erfindung ist es daher, ein Verfahren zur Herstellung eines Kunststoffgranulats anzugeben, das Kunststoffgranulat mit einer höheren Qualität im Hinblick auf Viskosität, Farbe, Acetaldehydgehalt, Aufschmelzverhalten und Ähnliches erzeugt. Insbesondere soll dabei der apparative Aufwand möglichst gering gehalten und das Verfahren mit möglichst geringen Betriebskosten betrieben werden.

Diese Aufgabe wird durch die kennzeichnenden Merkmale des Patentanspruches 1 gelöst.

Die Unteransprüche bilden vorteilhafte Ausführungsformen des erfindungsgemäßen Verfahrens.

Der Erfindung liegt die Erkenntnis zugrunde, dass sowohl die Prozessparameter bei der Kunststoffgranulierung, welche für die Nukleierung zur Beeinflussung der Kristallisation, als auch für die Kristallisation als solche verantwortlich sind, aber auch eine Dealdehydisierung der Kunststoffgranulate die Qualität der Kunststoffgranulate erheblich beeinflussen und daher beide Maßnahmen kombiniert mit angepassten und aufeinander abgestimmten Parametern zu einer besseren Qualität der Kunststoffgranulate insgesamt führen. Zudem ergeben sich dadurch weitere Möglichkeiten das Verfahren im Hinblick auf die Betriebskosten zu optimieren und die Qualität der Kunststoffgranulate zu verbessern.

Nach der Erfindung ist daher ein Verfahren zur Herstellung eines Kunststoffgranulats angegeben, bei dem ein Prozessfluid in einer Prozesskammer enthalten ist. In der Prozesskammer findet eine Unterwassergranulierung statt. Das Prozessfluid weist dabei in der Prozesskammer eine Temperatur auf, die in einem Temperaturbereich von größer oder gleich 120°C bis maximal 160°C liegt. Zudem herrscht in der Prozesskammer ein Prozessdruck von größer als der Druck der Dampfdruckkurve des Prozessfluids (12), jedoch mindestens 2,0 bar. Unter diesem Prozessdruck erfolgt ein Granulieren der Kunststoffstränge zu Kunststoffgranulat. Aus der Prozesskammer wird dann ein Gemisch von Prozessfluid und Kunststoffgranulat unter Abkühlung des Kunststoffgranulats in eine erste Kühlstrecke abgeleitet, wobei i in einer ersten Trennvorrichtung das Kunststoffgranulat unter Prozessdruck vom Prozessfluid getrennt wird. Anschließend wird das Kunststoffgranulat dann in Linie kontinuierlich einem Dealdehydisierungsbehälter zugeführt. In der ersten Kühlstrecke wird der Prozessdruck aufrechterhalten und ein gezieltes Nukleieren, also die Generierung von Kristallisationskeimen, an der Oberfläche des Kunststoffgranulats durch eine optimierte Kühltemperatur ermöglicht, sodass das Kunststoffgranulat optimierte Voraussetzungen für die Kristallisation hat und dem Dealdehydisierungsbehälter zugeführt werden kann. Im Dealdehydisierungsbehälter wird das Kunststoffgranulat mit einem Spülgas, insbesondere Spülluft, behandelt, um den Acetaldehydgehalt des Kunststoffgranulats zu verringern. Der Einsatz von Spülgas ist besonders einfach und spart, insbesondere bei Verwendung von Spülluft, erheblich Betriebskosten.

Vorzugsweise ist die Prozesskammer von einer Lochplatte zur Erzeugung von Strängen aus flüssigem Kunststoff teilweise begrenzt. In der Prozesskammer wirkt eine Zerteilvorrichtung mit der Lochplatte für die aus der Lochplatte austretenden Kunststoffstränge zusammen, und es erfolgt die Unterwassergranulierung durch die Zerteilvorrichtung in dem Prozessfluid an der Lochplatte in der Prozesskammer. Es hat sich gezeigt, dass unter diesen Bedingungen für die Weiterverarbeitung des Kunststoffgranulats günstige Oberflächenformen entstehen. Hierdurch wird zudem auch der Grad an Vakuolenfreiheit im mit diesem Verfahren hergestellten Kunststoffgranulat weiterhin erhöht.

Gemäß einer Ausführungsform wird nach der ersten Trennvorrichtung das Kunststoffgranulat unmittelbar durch Trockengas, insbesondere Trockenluft, über eine Kristallisationsstrecke zu einem Dealdehydisierungsbehälter gefördert. Durch dieses zweistufige Abkühlen des Kunststoffgranulats wird zum einen erreicht, dass die Oberflächengüte des Kunststoffgranulats verbessert wird, und zum anderen, dass die Kristallisation des Kunststoffgranulats zielgerichtet über die Trockenluftparameter beeinflusst und somit optimiert werden kann. Zudem wird ein Verkleben der Kunststoffgranulate verhindert.

Vorzugsweise wird das Trockengas mit den Kunststoffgranulaten zusammen in den Dealdehydisierungsbehälter hineingeführt und dient als weiteres Spülgas. Hierbei ist das Trockengas sowohl Transportmedium für das Kunststoffgranulat zum Dealdehydisierungsbehälter als auch Behandlungsmedium in dem Dealdehydisierungsbehälter für das dort eingebrachte Kunststoffgranulat, wodurch sich ebenfalls der apparative und energetische Aufwand verringern lässt.

Gemäß einer Ausführungsform der Erfindung wird das Kunststoffgranulat in den Dealdehydisierungsbehälter mit einer Oberflächentemperatur in Höhe von 165°C bis 185°C eingebracht. Das Kunststoffgranulat weist dadurch von Anfang an eine Temperatur auf, welche den Dealdehydisierungsprozess im Dealdehydisierungsbehälter begünstigt.

Vorzugsweise erfasst das Trockengas die Kunststoffgranulate nach der ersten Trennvorrichtung mit einem Taupunkt von -25°C bis -40°C. Hierdurch wird vermieden, dass während des Transports des Kunststoffgranulat Wasser an dem Kunststoffgranulat kondensiert und die Kristallisation ungewollt negativ beeinflusst.

Insbesondere erfasst dabei das Trockengas die Kunststoffgranulate nach der ersten Trennvorrichtung mit einer Temperatur von 180°C bis 210°C, welche während des Transports den Kristallisationsprozess begünstigt. Über die entsprechende Transportgeschwindigkeit und/oder die Länge der Kristallisationsstrecke kann der Kristallisationsgrad der Kunststoffgranulate festgelegt werden, mit dem die Kunststoffgranulate in den Dealdehydisierungsbehälter eintreten.

Durch die Unterwassergranulierung werden bevorzugt Kunststoffgranulate erzeugt, die nach dem Dealdehydisierungsbehälter ein mittleres Gewicht eines Kunststoffgranulats in einem Bereich von 8 bis 36 mg, insbesondere 12 bis 24 mg, aufweisen. Je kleiner das Kunststoffgranulat ist, umso besser ist dies für die Diffusionsvorgänge. Insbesondere kann dann das Aldehyd leichter dem Kunststoffgranulat entzogen werden. Ein kleineres Kunststoffgranulat kühlt aber schneller ab, was die Kristallisation wieder negativ beeinflusst. Insofern ist der angegebene Wert ein Kompromiss zwischen den gegenteiligen Anforderungen während des Prozesses an das Kunststoffgranulat. Die Gewichtsangaben beziehen sich auf das mittlere Gewicht der Kunststoffgranulate, mit einer Toleranz des Gewichts der Kunststoffgranulate von maximal 10%. Dies hat den Vorteil, dass das Kunststoffgranulat homogen kristallisiert und einfacher weiter zu verarbeiten ist.

Um den apparativen Aufwand weiter zu optimieren, bildet ein Teil des Trockengases auch das Spülgas für den Dealdehydisierungsbehälter, in dem ein Teil des Trockengases, insbesondere vor der Kristallisationstrecke, abgezweigt und als Spülgas dem Dealdehydisierungsbehälter zugeführt wird. Dadurch bedarf es nur einer Gasaufbereitungseinheit, nämlich eine Gasaufbereitung für das Trockengas. Hierdurch wird der apparative und energetische Aufwand des Verfahrens weiter optimiert.

Auf einfache Weise wird ein geschlossener Kreislauf dadurch erzeugt und kann Energie aus dem Spülgas dem weiteren Verfahren wieder zur Verfügung gestellt werden, in dem über einen Ausgang an dem Dealdehydisierungsbehälter ein aus dem mit den Kunststoffgranulaten in den Dealdehydisierungsbehälter eingebrachten Trockengas - weiteres Spülgas - und aus dem in den Dealdehydisierungsbehälter eingebrachten Spülgas bestehendes Prozessgas, insbesondere zusammen mit einem die benötigte Menge Trockengas ergänzenden Frischgas, einer Gasaufbereitung zugeführt wird, welche dieses Gas als Trockengas aufbereitet und dem Kunststoffgranulat nach der ersten Trennvorrichtung wieder zuführt.

Nach der ersten Trennvorrichtung kann das Verfahren beispielsweise in zwei verschiedenen Alternativen weiterbetrieben werden:

Zum einen ist es möglich, dass nach der ersten Trennvorrichtung und vor der Kristallisationsstrecke eine solche Druckreduktion erfolgt, dass ein vorgegebener Taupunkt des Trockengases gewährleistet ist. Dies hat den Vorteil, dass insbesondere die Kristallisationsstrecke und der Dealdehydisierungsbehälter einfacher aufgebaut sein können, da kein Prozessdruck mehr herrscht.

Zum anderen ist es jedoch auch möglich, dass ausgehend von der ersten Trennvorrichtung bis zum Dealdehydisierungsbehälter und im Dealdehydisierungsbehälter ein Druck von mehr als 2 bar im Trockengas bzw. Spülgas aufrechterhalten wird und nach dem Dealdehydisierungsbehälter eine Druckreduktion erfolgt, insbesondere auf Atmosphärendruck. Nachdem das Kristallisieren und das Dealdehydisieren unter Druck stattfinden, ist der Parameterbereich, der durch physikalische Grenzen gesetzt ist, erweitert. Vorzugsweise beträgt dabei der Druck im Dealdehydisierungsbehälter kleiner als 10 bar.

Die Druckreduktion nach dem Dealdehydisierungsbehälter kann über eine Zellradschleuse oder eine Schleuse oder über eine Zwischenkammer mit einem Schieber am Eingang und einem Schieber am Ausgang und wechselseitigem Öffnen der Schieber erfolgen.

Gemäß einer vorteilhaften Weiterbildung der Erfindung wird während der Dealdehydisierung der Druck im Dealdehydisierungsbehälter im Bereich des Taupunkts bei Atmosphärendruck von kleiner 0°C konstant gehalten.

Nach der Dealdehydisierung kann das Kunststoffgranulat einer weiteren Kühlstrecke mit einem Kühlfluid zugeführt werden, in der das Kunststoffgranulat bei einer Kühlfluidtemperatur von kleiner als 40°C auf kleiner 65°C gekühlt wird.

Vorzugsweise weist dabei das Kühlfluid eine Beladungsdichte von mehr als 30 Gew.-% Kunststoffgranulate in der weiteren Kühlstrecke auf.

Das Kunststoffgranulat besteht insbesondere aus einem teilkristallinen thermoplastischen Polyester oder Co-Polyester, beispielsweise Polyethylenterephthalat, da hier die oben genannten Vorteile besonders zum Tragen kommen.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine schematische Ansicht eines Herstellungsprozesses von Kunststoffgranulat gemäß einer ersten Ausführungsform;
- Fig. 2: eine schematische Ansicht eines Herstellungsprozesses von Kunststoffgranulat gemäß einer zweiten Ausführungsform, und
- Fig. 3: eine schematische Ansicht eines Herstellungsprozesses von Kunststoffgranulat gemäß einer dritten Ausführungsform.

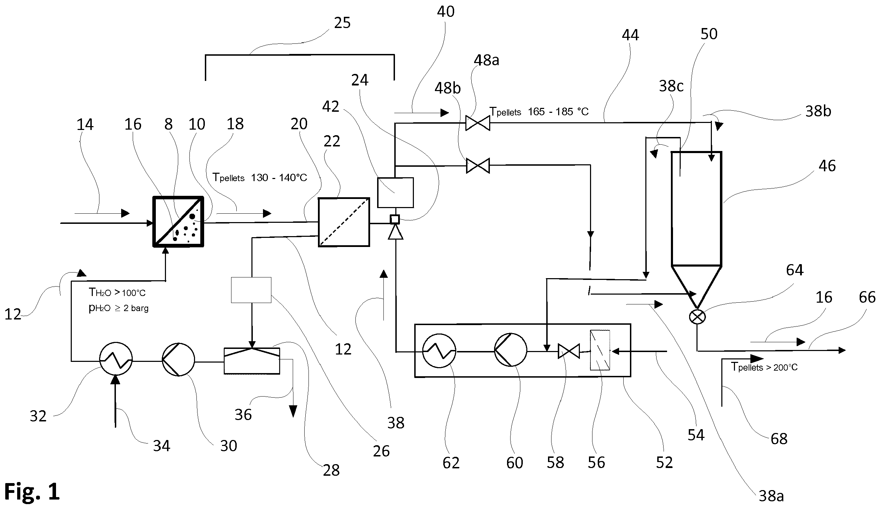

In Fig. 1 ist ein Verfahren nach der Erfindung schematisch dargestellt. In einer Prozesskammer 10 befindet sich ein Messerrotor, der einer Lochplatte 8 zugeordnet ist. Der Messerrotor und die Lochplatte 8 bilden einen üblichen Unterwassergranulator. Der Prozesskammer 10 wird sukzessive heißes Prozessfluid 12, in der Regel heißes Prozesswasser, zugeführt. Zudem wird eine Kunststoffschmelze 14 über die Lochplatte 8 in die Prozesskammer 10 eingebracht, welche als Kunststoffstränge bei der Lochplatte 8 austretenden und durch den Messerrotor in Kunststoffgranulate 16 geschnitten werden. Es entsteht somit ein Gemisch 18 aus Kunststoffgranulat 16 und Prozesswasser 12.

Die Kunststoffschmelze besteht dabei aus einem Kunststoff, zum Beispiel thermoplastischer Polyester oder Co-Polyester, beispielsweise Polyethylenterephthalat. Die Kunststoffschmelze 14 wird zudem in Abhängigkeit von der Geschwindigkeit des Messerrotors durch die Lochplatte 8 gepresst. Durch entsprechende Abstimmung der Geschwindigkeiten des Durchtritts der Kunststoffschmelze durch die Lochplatte 8 im Verhältnis zur Drehgeschwindigkeit des Messerrotors sowie der Temperatur des Prozesswassers 12 lassen sich die Abkühlbereiche festlegen. Bevorzugt ist die Abkühlung nur durch Konvektion, da hierdurch die Oberflächengüte und somit die Qualität des Kunststoffgranulats 16 am besten ist.

Das Prozesswasser 12 weist in der Prozesskammer 10 eine Temperatur auf, die in einem Bereich von 120°C bis 160°C liegt. Zudem herrscht in der Prozesskammer sowie in den im Folgenden noch beschriebenen Abschnitten des Prozesses ein Prozessdruck von größer als dem Druck der Dampfdruckkurve des Prozesswassers 12, jedoch mindestens 2,0 bar.

Über eine Leitung 20 und eine Trennvorrichtung 22, in der das Gemisch 18 aus Kunststoffgranulat 16 und Prozesswasser 12 voneinander getrennt wird, wird das Kunststoffgranulat 16 einem Mischbereich 24 zugeführt. Der Bereich von der Prozesskammer 10 über Leitung 20 und der Trennvorrichtung 22 bildet eine erste Kühlstrecke 25.

Das in der Trennvorrichtung 22 von dem Gemisch 18 abgetrennte Prozesswasser 12 wird einem Prozesswasserspeicher 26 zugeführt. Von dort aus wird das Prozesswasser 12 über einen Filter 28, eine Pumpe 30 einem Wärmetauscher 32 zugeführt, in dem das Prozesswasser 12 wieder auf die erforderliche, in der Prozesskammer 10 benötigte Prozesstemperatur erhitzt wird. Hierfür wird dem Wärmetauscher 32 Heizmedium 34 zugeführt. Vom Filter 28 werden Filterrückstände 36 abgeführt. Das im Wärmetauscher 32 erhitzte Prozesswasser 12 wird dann wieder der Prozesskammer 10 zugeführt.

In dem Mischbereich 24 wird das Kunststoffgranulat 16 mit Trockenluft 38 zu einem Gemisch 40 vermischt. Die Trockenluft 38 erfasst die Kunststoffgranulate 16 im Mischbereich 24 nach der ersten Trennvorrichtung 22 mit einem Taupunkt von -25°C bis -40°C. Dabei liegt die Temperatur der Trockenluft 38 in einem Bereich von 180°C bis 210°C. Das Gemisch 40 wird einer Druckschleuse 42, beispielsweise in Form einer Impellerschleuse, zugeführt, wo das Druckniveau auf Umgebungsdruck abgesenkt wird. Die Trocknerluft 38 weist dabei weiter einen vorgegebenen Taupunkt auf. Das Gemisch 40 wird über ein Ventil 48a und einer Kristallisationsstrecke 44 einem Dealdehydisierungsbehälter 46 zugeführt. Über das Ventil 48a wird die Geschwindigkeit des Gemisches durch die Kristallisationsstrecke 44 gesteuert.

Nach der Druckschleuse 42 wird Trockenluft 38 abgezweigt und als Spülluft 38a dem Dealdehydisierungsbehälter 46 im unteren Bereich zugeführt. Über ein Ventil 48b wird die abzuzweigende Menge geregelt/gesteuert.

Das Gemisch 40 aus Kunststoffgranulat 16 und Trockenluft 38 durchläuft die Kristallisationsstrecke 44. Über die Länge der Kristallisationsstrecke 44 aber auch über die Strömungsgeschwindigkeit der Trockenluft 38 wird die Verweildauer in der Kristallisationsstrecke 44 bestimmt. Die Kunststoffgranulate 16 haben vor Eintritt in den Dealdehydisierungsbehälter 46 eine Oberflächentemperatur von 165°C bis 185°C. Das Gemisch 40 aus Kunststoffgranulaten 16 und Trockenluft 38 tritt in den Dealdehydisierungsbehälter 46 ein. Dieser Teil der Trockenluft 38 dient dabei als weitere Spülluft 38b.

Der Dealdehydisierungsbehälter 46 weist im oberen Bereich einen Ausgang 50 auf, über den die Spülluft 38a und die weitere Spülluft 38b einer Trockenluftaufbereitungsvorrichtung 52 wieder zugeführt wird. Die Trockenluftaufbereitungsvorrichtung 52 weist eine Frischluftzufuhr 54, einen Frischluftfilter 56, eine Steuer/Regelventil 58 zur Einstellung der benötigten Frischluftmenge, eine Pumpe 60 sowie eine Aufbereitungseinheit 62 auf, die aus Temperierung und Entfeuchtung besteht. Dabei werden Acetalaldehyd und überschüssiges Wasser mittels Absorption an Molekularsieb oder ähnlichen, dem Fachmann bekannten Substanzen und Verfahren entfernt. Acetalaldehyd zerfällt dabei weitgehend in Wasser und Kohlendioxid. Die aus dem Dealdehydisierungsbehälter 46 über den Ausgang 50 austretende Spülluft 38c, bestehend aus der Spülluft 38 a und 38 b, wird der Frischluft 54 nach dem Steuer-/Regelventil 58 zugeführt. Die Spülluft 38 c und die Frischluft 54 bilden die neue Trockenluft 38, so dass der Kreislauf geschlossen ist.

Aus dem Dealdehydisierungsbehälter 46 treten die Kunststoffgranulate 16 mit einer Temperatur von größer als 200°C über eine Schleuse 64 aus. Dabei weist das Kunststoffgranulat 16 ein Granulatgewicht von 8 bis 36 mg, insbesondere 12 bis 24 mg auf. Entsprechend ist die Unterwassergratulation in der Prozesskammer 10 abgestimmt. Die Abweichung des Gewichts der Kunststoffgranulate 16 beträgt maximal 10 % von einem Gewichtsmittelwert der Kunststoffgranulate. Der Mittelwert bezieht sich dabei auf einen statistisch relevanten Anteil von Kunststoffgranulaten 16 in einem kleinen Zeitfenster nach dem Dealdehydisierungsbehälter 46, also dem Prozesstrakt.

Nach dem Dealdehydisierungsbehälter 46 wird das Kunststoffgranulat 16 einer weiteren Kühlstrecke 66 mit einem Kühlfluid zugeführt, in dem das Kunststoffgranulat 16 bei einer Kühlfluidtemperatur von kleiner als 40°C auf kleiner 65°C gekühlt wird. Dabei weist das Kühlfluid eine Beladungsdichte von mehr als 30 Gew.-% Kunststoffgranulate 16 in der weiteren Kühlstrecke 66 auf.

Das Kunststoffgranulat 16 besteht aus einem teilkristallinen thermoplastischen Polyester oder Co-Polyester, beispielsweise Polyethylenterephthalat.

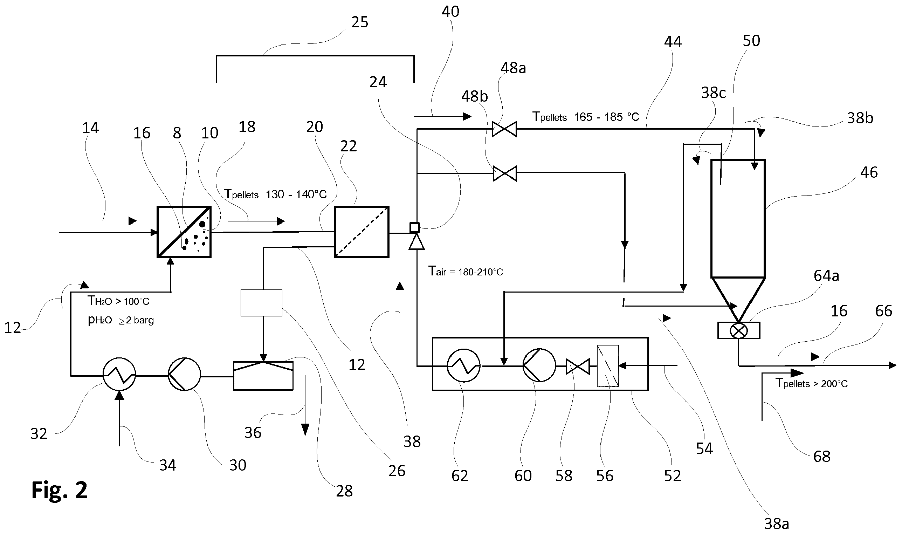

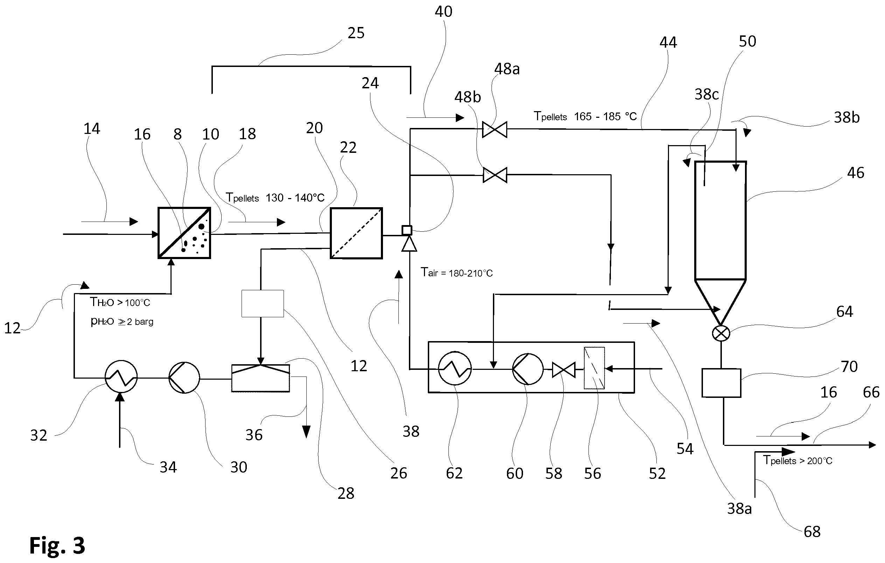

In den Figuren 2 und 3 ist eine weitere Ausführungsform dargestellt. Hierbei wird der Prozessdruck so lange aufrechterhalten, bis die Kunststoffgranulate 16 den Dealdehydisierungsbehälter 46 verlassen.

Aus diesem Grund erfolgt eine Druckreduktion erst nach dem Dealdehydisierungsbehälter 46. Die Spülluft 38c wird daher erst nach dem Hochdruckgebläse 60 der Frischluft 54 zugeführt, da die Spülluft 38c noch unter Druck steht. Ausgehend von der ersten Trennvorrichtung 22 bis zum Dealdehydisierungsbehälter 46 wird ein Druck von mehr als 2 bar in der Trockenluft 38 aufrechterhalten. Erst nach dem Dealdehydisierungsbehälter 46 erfolgt eine Druckreduktion, insbesondere auf Atmosphärendruck. Der Druck im Dealdehydisierungsbehälter 46 ist dabei kleiner als 10 bar. Während der Dealdehydisierung im Dealdehydisierungsbehälter 46 unter Druck wird der Taupunkt bei Atmosphärendruck von kleiner 0°C konstant gehalten.

Gemäß Figur 2 erfolgt die Druckreduktion durch eine Zellenradschleuse 64a. Alternativ kann dies auch über eine Schleuse, oder über eine Zwischenkammer mit einem Schieber am Eingang und einem Schieber am Ausgang und wechselseitigem Öffnen der Schieber erfolgen.

Gemäß Figur 3 ist der Schleuse 64 eine Druckschleuse 70 nachgeschaltet. Ansonsten laufen die Verfahren entsprechend ab und die entsprechenden Vorrichtungen in der anhand von Figur 1 beschriebenen Weise in Linie vorgesehen. Ein Vorteil des Verfahrens ist auch die Fertigung der Kunststoffgranulate in Linie, d.h. kontinuierlich und nicht sequenziell.

Zudem wird durch die in dem Verfahren beschriebene Direktkristallisation Energie eingespart, da zum einen in der Kunststoffschmelze enthaltene Energie für die Kristallisation genutzt wird und zum anderen eine Zwischenlagerung entfällt.

Ferner wird auf Grund des gesenkten Aldehydgehalts eine bessere Verträglichkeit des Kunststoffgranulats mit Produkten, mit denen es in Kontakt kommt, erreicht.

Durch das erfindungsgemäße Verfahren wird die Qualität der Kunststoffgranulate erheblich verbessert. Eine konstant hohe Viskosität bzw. ein hohes Molekulargewicht des Kunststoffs wird gewährleistet. Dieses ist daher weitaus besser geeignet um hochwertigere Produkte herzustellen.

### Bezugszeichenliste

- 8: Lochplatte
- 10: Prozesskammer
- 12: Prozessfluid, Prozesswasser
- 14: Kunststoffschmelze
- 16: Kunststoffgranulat
- 18: Gemisch aus Prozessfluid 12 und Kunststoffgranulat 16
- 20: Leitung
- 22: Trennvorrichtung
- 24: Mischkammer
- 25: erste Kühlstrecke
- 26: Prozesswasserspeicher
- 28: erster Filter
- 30: erste Pumpe
- 32: erster Wärmetauscher
- 34: Heizmedium
- 36: Filterrückstände
- 38: Trockenluft
- 38a: Spülluft
- 38b: Spülluft
- 38c: Spülluft
- 40: Gemisch aus Kunststoffgranulat 16 und Trockenluft 38
- 42: Druckschleuse
- 44: Kristallisationsstrecke
- 46: Dealdehydisierungsbehälter
- 48a: Steuer-/Regelventil
- 48b: Steuer-/Regelventil
- 50: Ausgang aus dem Dealdehydisierungsbehälter 46
- 52: Trockenluftaufbereitungsvorrichtung
- 56: Frischluftfilter
- 58: Steuer-/Regelventil für die Frischluft
- 60: Hochdruckgebläse
- 62: Aufbereitungseinheit aus Entfeuchtung und Temperierung
- 64: Schleuse des Dealdehydisierungsbehälter 46
- 64a: Zellenradschleuse
- 66: weitere Kühlstrecke
- 68: weiteres Kühlfluid
- 70: Druckschleuse

## Patentansprüche

1. Verfahren zur Herstellung eines Kunststoffgranulats (16), bei dem ein Prozessfluid (12) in einer Prozesskammer (10) enthalten ist, in der Prozesskammer (10) eine Unterwassergranulierung stattfindet, das Prozessfluid (12) in der Prozesskammer (10) eine Temperatur aufweist, die in einem Temperaturbereich von 120°C bis 160°C liegt, in der Prozesskammer (10) ein Prozessdruck von mindestens 2,0 bar herrscht und ein Granulieren der Kunststoffstränge (14) zu Kunststoffgranulat (16) unter diesem Prozessdruck erfolgt, aus der Prozesskammer (10) ein Gemisch (18) von Prozessfluid (12) und Kunststoffgranulat (16) unter Abkühlung des Kunststoffgranulats (16) in eine erste Kühlstrecke (25) abgeleitet wird, in einer ersten Trennvorrichtung (22) das Kunststoffgranulat (16) unter Prozessdruck vom Prozessfluid (12) getrennt wird, **dadurch gekennzeichnet, dass** in der ersten Kühlstrecke (25) der Prozessdruck aufrechterhalten wird, in der Prozesskammer (10) ein Prozessdruck von größer als der Druck der Dampfdruckkurve des Prozessfluids (12) herrscht, und das Kunststoffgranulat (16) nach der Trennung vom Prozessfluid (12) in der ersten Trennvorrichtung (22) in Linie kontinuierlich einem Dealdehydisierungsbehälter (46) zugeführt wird, in dem das Kunststoffgranulat (16) mit einem Spülgas (38a, 38b), insbesondere Spülluft, behandelt wird, um den Acetaldehydgehalt des Kunststoffgranulats (16) zu verringern.

2. Verfahren nach Anspruch 1, **dadurch gekennzeichnet, dass** die Prozesskammer (10) von einer Lochplatte (8) zur Erzeugung von Strängen aus flüssigem Kunststoff (14) teilweise begrenzt ist, in der Prozesskammer (10) eine Zerteilvorrichtung mit der Lochplatte (8) für die aus der Lochplatte (8) austretenden Kunststoffstränge zusammenwirkt, und die Unterwassergranulierung durch die Zerteilvorrichtung in dem Prozessfluid (12) an der Lochplatte (8) in der Prozesskammer (10) erfolgt.

3. Verfahren nach Anspruch 1 oder 2, **dadurch gekennzeichnet, dass** nach der ersten Trennvorrichtung (22) das Kunststoffgranulat (16), insbesondere unmittelbar, durch Trockengas (38), vorzugsweise Trockenluft, über eine Kristallisationsstrecke (44) zu einem Dealdehydisierungsbehälter (46) gefördert wird.

4. Verfahren nach Anspruch 3, **dadurch gekennzeichnet, dass** das Trockengas (38) mit den Kunststoffgranulaten (16) zusammen in den Dealdehydisierungsbehälter (46) hineingeführt wird und als weiteres Spülgas (40) dient.

5. Verfahren nach einem der vorangehenden Ansprüche, **dadurch gekennzeichnet, dass** das Kunststoffgranulat (16) in den Dealdehydisierungsbehälter (46) mit einer Oberflächentemperatur in Höhe von 165° bis 185°C eingebracht wird.

6. Verfahren nach einem der Ansprüche 3 bis 5, **dadurch gekennzeichnet, dass** das Trockengas (38) die Kunststoffgranulate (16) nach der ersten Trennvorrichtung (22) mit einem Taupunkt von -25°C bis -40°C erfasst.

7. Verfahren nach einem der Ansprüche 3 bis 5, **dadurch gekennzeichnet, dass** das Trockengas (38) die Kunststoffgranulate (16) nach der ersten Trennvorrichtung (22) mit einer Temperatur von 180°C bis 210°C erfasst.

8. Verfahren nach einem der vorangehenden Ansprüche, **dadurch gekennzeichnet, dass** durch die Unterwassergranulierung Kunststoffgranulate (16) erzeugt werden, die nach dem Dealdehydisierungsbehälter (46) ein mittleres Gewicht eines Kunststoffgranulats in einem Bereich von 8 bis 36 mg, insbesondere 12 bis 24 mg, aufweisen.

9. Verfahren nach einem der Ansprüche 3 bis 8, **dadurch gekennzeichnet, dass** ein Teil des Trockengases (38) auch das Spülgas (38a) für den Dealdehydisierungsbehälter (46) bildet, in dem ein Teil des Trockengases (38), insbesondere vor der Kristallisationsstrecke (44), abgezweigt und als Spülgas (38a, 38b, 38c) dem Dealdehydisierungsbehälter (46) zugeführt wird.

10. Verfahren nach einem der Ansprüche 3 bis 9, **dadurch gekennzeichnet, dass** über einen Ausgang (50) an dem Dealdehydisierungsbehälter (46) ein aus dem mit den Kunststoffgranulaten (16) in den Dealdehydisierungsbehälter (46) eingebrachten Trockengas (38b) und dem in den Dealdehydisierungsbehälter (46) eingebrachten Spülgas (38a) bestehendes Prozessgas, insbesondere zusammen mit einem die benötigte Menge Trockengas (38) ergänzenden Frischgas, einer Gasaufbereitung zugeführt wird, welche dieses Gas als Trockengas (38) aufbereitet und dem Kunststoffgranulat (16) nach der ersten Trennvorrichtung (22) wieder zuführt.

11. Verfahren nach einem der Ansprüche 3 bis 10, **dadurch gekennzeichnet, dass** nach der ersten Trennvorrichtung (22) und vor der Kristallisationsstrecke (44) eine solche Druckreduktion erfolgt, dass ein vorgegebener Taupunkt des Trockengases (38) gewährleistet ist.

12. Verfahren nach einem der Ansprüche 3 bis 10, **dadurch gekennzeichnet, dass** ausgehend von der ersten Trennvorrichtung (22) bis zum Dealdehydisierungsbehälter (46) ein Druck von mehr als 2 bar im Trockengas (38) aufrechterhalten wird und nach dem Dealdehydisierungsbehälter (46) eine Druckreduktion erfolgt, insbesondere auf Atmosphärendruck.

13. Verfahren nach Anspruch 12, **dadurch gekennzeichnet, dass** der Druck im Dealdehydisierungsbehälter (46) kleiner als 10 bar beträgt.

14. Verfahren nach einem der Ansprüche 3 bis 10 oder 11 bis 13, **dadurch gekennzeichnet, dass** die Druckreduktion nach dem Dealdehydisierungsbehälter (46) über eine Zellradschleuse (64a) oder eine Schleuse (64) oder über eine Zwischenkammer mit einem Schieber am Eingang und einem Schieber am Ausgang und wechselseitigem Öffnen der Schieber erfolgt.

15. Verfahren nach Anspruch 14, **dadurch gekennzeichnet, dass** während der Dealdyhydisierung unter Druck der Druck im Dealdehydisierungsbehälter (46) im Bereich des Taupunkts bei Atmosphärendruck von kleiner 0°C konstant gehalten wird.

16. Verfahren nach einem der vorangehenden Ansprüche, **dadurch gekennzeichnet, dass** nach der Dealdehydisierung das Kunststoffgranulat (16) einer weiteren Kühlstrecke (66) mit einem Kühlfluid (68) zugeführt wird, in dem das Kunststoffgranulat (16) bei einer Kühlfluidtemperatur von kleiner als 40°C auf kleiner 65°C gekühlt wird.

17. Verfahren nach Anspruch 16, **dadurch gekennzeichnet, dass** das Kühlfluid (68) eine Beladungsdichte von mehr als 30 Gew.-% Kunststoffgranulate (16) in der weiteren Kühlstrecke (66) aufweist.

18. Verfahren nach einem der vorangehenden Ansprüche, **dadurch gekennzeichnet, dass** das Kunststoffgranulat (16) aus einem teilkristallinen thermoplastischen Polyester oder Co-Polyester, beispielsweise Polyethylenterephthalat, besteht.

## Claims

1. Method for producing plastic granules (16), in which a process fluid (12) is contained in a process chamber (10), underwater granulation is performed in the process chamber (10), the process fluid (12) in the process chamber (10) has a temperature which is in a temperature range of between 120°C and 160°C, a process pressure of at least 2.0 bar prevails in the process chamber (10), and the plastic strands (14) are comminuted into plastic granules (16) at this process pressure, a mixture (18) of process fluid (12) and plastic granules (16) is discharged from the process chamber (10) and supplied to a first cooling zone (25) so as to cool the plastic granules (16), the plastic granules (16) are separated from the process fluid (12) in a first separating device (22) at process pressure, **characterized in that** the process pressure is maintained in the first cooling zone (25), the pressure prevailing in the process chamber (10) is higher than the pressure of the vapor pressure curve of the process fluid (12), and after separation of the plastic granules (16) from the process fluid (12) in the first separating device (22), the plastic granules (16) are continuously fed in line to a dealdehydization vessel (46), in which the plastic granules (16) are treated with a scavenging gas (38a, 38b), in particular scavenging air so as to reduce the acetaldehyde content of the plastic granules (16).

2. Method according to claim 1, **characterized in that** part of the process chamber (10) is delimited by a perforated plate (8) for producing strands of liquid plastic material (14), a cutting device provided in the process chamber (10) interacts with the perforated plate (8) for the plastic strands emerging from the perforated plate (8), and underwater granulation is performed by the cutting device in the process fluid (12) at the perforated plate (8) in the process chamber (10).

3. Method according to claim 1 or 2, **characterized in that** downstream of the first separating device (22), drying gas (38), preferably drying air, is used to convey the plastic granules (16), in particular directly, to a dealdehydization vessel (46), via a crystallization zone (44).

4. Method according to claim 3, **characterized in that** the drying gas (38) is fed into the dealdehydization vessel (46) together with the plastic granules (16) and serves as an additional scavenging gas (40).

5. Method according to any one of the preceding claims, **characterized in that** the plastic granules (16) are introduced into the dealdehydization vessel (46) at a surface temperature of between 165°C and 185°C.

6. Method according to one of claims 3 to 5 above, **characterized in that** the drying gas (38) scavenges the plastic granules (16) downstream of the first separating device (22) with a dew point of between -25°C and -40°C.

7. Method according to one of claims 3 to 5 above, **characterized in that** the drying gas (38) scavenges the plastic granules (16) downstream of the first separating device (22) with a temperature of between 180°C and 210°C.

8. Method according to any one of the preceding claims, **characterized in that** the underwater granulation step produces plastic granules (16) which, after passing through the dealdehydization vessel (46), have an average plastic granulate weight of between 8 mg and 36 mg, in particular of between 12 mg and 24 mg.

9. Method according to one of claims 3 to 8 above, **characterized in that** part of the drying gas (38) is also used as the scavenging gas (38a) for the dealdehydization vessel (46), by branching off part of the drying gas (38), in particular upstream of the crystallization zone (44), and supplying it to the dealdehydization vessel (46) as a scavenging gas (38a, 38b, 38c).

10. Method according to one of claims 3 to 9 above, **characterized in that** via an outlet (50) of the dealdehydization vessel (46), a process gas, which consists of the drying gas (38b) introduced into the dealdehydization vessel (46) together with the plastic granules (16) and the scavenging gas (38a) introduced into the dealdehydization vessel (46), is supplied, in particular together with a fresh gas supplementing the required quantity of drying gas (38), to a gas processing unit that processes this gas to give drying gas (38) and supplies it to the plastic granules (16) downstream of the first separating device (22) again.

11. Method according to one of claims 3 to 10 above, **characterized in that** downstream of the first separating device (22) and upstream of the crystallization zone (44), pressure is reduced to the extent required to guarantee a predetermined dew point of the drying gas (38).

12. Method according to one of claims 3 to 10 above, **characterized in that** starting from the first separating device (22) up to the dealdehydization vessel (46), a pressure of more than 2 bar is maintained in the drying gas (38), which pressure is then reduced, in particular to atmospheric pressure, downstream of the dealdehydization vessel (46).

13. Method according to claim 12, **characterized in that** the pressure prevailing in the dealdehydization vessel (46) is below 10 bar.

14. Method according to one of claims 3 to 10 or 11 to 13 above, **characterized in that** the pressure is reduced downstream of the dealdehydization vessel (46) by means of a rotary valve (64a) or a lock (64), or by means of an intermediate chamber having a slide at its inlet and a slide at its outlet, which slides are opened alternatingly.

15. Method according to claim 14, **characterized in that** during the dealdehydization under pressure, the pressure prevailing in the dealdehydization vessel (46) is kept constant in the dew point range, at an atmospheric pressure of less than 0°C.

16. Method according to any one of the preceding claims, **characterized in that,** following dealdehydization, the plastic granules (16) are supplied to an additional cooling zone (66) with a cooling fluid (68), where the plastic granules (16) are cooled down to a temperature of below 65°C at a cooling fluid temperature of below 40°C.

17. Method according to claim 16, **characterized in that** in the additional cooling zone (66), the cooling fluid (68) has a loading density of more than 30% by weight of plastic granules (16).

18. Method according to any one of the preceding claims, **characterized in that** the plastic granules (16) consist of a partially crystalline thermoplastic polyester or copolyester, for example polyethylene terephthalate.

## Revendications

1. Procédé de production d'un granulé de matière plastique (16), dans lequel un fluide de processus (12) est contenu dans une chambre de processus (10), une granulation subaquatique s'effectue dans la chambre de processus (10), le fluide de processus (12) dans la chambre de processus (10) présente une température qui est comprise dans une plage de température de 120 °C à 160 °C, une pression de processus d'au moins 2,0 bar règne dans la chambre de processus (10) et une granulation des boudins de matière plastique (14) en granulé de matière plastique (16) s'effectue à cette pression de processus, un mélange (18) de fluide de processus (12) et de granulé de matière plastique (16) est évacué de la chambre de processus (10) tout en refroidissant le granulé de matière plastique (16) dans un premier tronçon de refroidissement (25), le granulé de matière plastique (16) est séparé du fluide de processus (12) à la pression de processus dans un premier dispositif séparateur (22), **caractérisé en ce que,** dans le premier tronçon de refroidissement (25), la pression de processus est maintenue, une pression de processus supérieure à la pression de la courbe de pression de vapeur du fluide de processus (12) règne dans la chambre de processus (10), et le granulé de matière plastique (16), après avoir été séparé du fluide de processus (12) dans le premier dispositif séparateur (22), est amené en continu dans une ligne à un récipient de désaldéhydation (46), dans lequel le granulé de matière plastique (16) est traité avec un gaz de rinçage (38a, 38b), en particulier de l'air de rinçage, pour réduire la teneur en acétaldéhyde du granulé de matière plastique (16).

2. Procédé selon la revendication 1, **caractérisé en ce que** la chambre de processus (10) est partiellement délimitée par une plaque perforée (8) pour produire des boudins de matière plastique liquide (14), un dispositif de fragmentation coopère avec la plaque perforée (8) pour les boudins de matière plastique sortant de la plaque perforée (8) dans la chambre de processus (10) et la granulation subaquatique est effectuée grâce au dispositif de fragmentation dans le fluide de processus (12) sur la plaque perforée (8) dans la chambre de processus (10).

3. Procédé selon la revendication 1 ou 2, **caractérisé en ce que,** après le premier dispositif séparateur (22), le granulé de matière plastique (16) est transporté, en particulier directement, par le gaz sec (38), de préférence l'air sec, sur un tronçon de cristallisation (44) jusqu'à un récipient de désaldéhydation (46).

4. Procédé selon la revendication 3, **caractérisé en ce que** le gaz sec (38) est introduit conjointement avec les granulés de matière plastique (16) dans le récipient de désaldéhydation (46) et sert de gaz de rinçage complémentaire (40).

5. Procédé selon l'une des revendications précédentes, **caractérisé en ce que** le granulé de matière plastique (16) est introduit dans le récipient désaldéhydation (46) avec une température de surface de 165° à 185 °C.

6. Procédé selon l'une des revendications 3 à 5, **caractérisé en ce que** le gaz sec (38) saisit les granulés de matière plastique (16) après le premier dispositif séparateur (22) à un point de rosée de -25 °C à -40 °C.

7. Procédé selon l'une des revendications 3 à 5, **caractérisé en ce que** le gaz sec (38) saisit les granulés de matière plastique (16) après le premier dispositif séparateur (22) à une température de 180 °C à 210 °C.

8. Procédé selon l'une des revendications précédentes, **caractérisé en ce que** la granulation subaquatique permet de produire des granulés de matière plastique (16) qui présentent un poids moyen de granulé de matière plastique dans une plage de 8 à 36 mg, en particulier de 12 à 24 mg, après le récipient de désaldéhydation (46).

9. Procédé selon l'une des revendications 3 à 8, **caractérisé en ce qu'une** partie du gaz sec (38) forme aussi le gaz de rinçage (38a) pour le récipient de désaldéhydation (46), dans lequel une partie du gaz sec (38) est déviée, en particulier avant le tronçon de cristallisation (44), et est amenée en tant que gaz de rinçage (38a, 38b, 38c) au récipient de désaldéhydation (46).

10. Procédé selon l'une des revendications 3 à 9, **caractérisé en ce qu'un** gaz de processus constitué du gaz sec (38b) introduit avec les granulés de matière plastique (16) dans le récipient de désaldéhydation (46) et du gaz de rinçage (38a) introduit dans le récipient de désaldéhydation (46), en particulier conjointement avec un gaz frais complétant la quantité nécessaire de gaz sec (38), est amené par le biais d'une sortie (50) sur le récipient de désaldéhydation (46) à un traitement gazeux qui traite ledit gaz sous forme de gaz sec (38) et l'amène de nouveau au granulé de matière plastique (16) après le premier dispositif séparateur (22).

11. Procédé selon l'une des revendications 3 à 10, **caractérisé en ce que,** après le premier dispositif séparateur (22) et avant le tronçon de cristallisation (44), une réduction de pression telle s'effectue de manière à garantir un point de rosée prédéfini du gaz sec (38).

12. Procédé selon l'une des revendications 3 à 10, **caractérisé en ce que,** à partir du premier dispositif séparateur (22) jusqu'au récipient de désaldéhydation (46), une pression de plus de 2 bar est maintenue dans le gaz sec (38) et, après le récipient de désaldéhydation (46), une réduction de pression s'effectue, notamment jusqu'à la pression atmosphérique.

13. Procédé selon la revendication 12, **caractérisé en ce que** la pression dans le récipient de désaldéhydation (46) est inférieure à 10 bar.

14. Procédé selon l'une des revendications 3 à 10 ou 11 à 13, **caractérisé en ce que** la réduction de pression après le récipient de désaldéhydation (46) s'effectue par le biais d'une écluse à roue cellulaire (64a) ou d'une écluse (64) ou par le biais d'une chambre intermédiaire avec une glissière à l'entrée et une glissière à la sortie et avec ouverture réciproque des glissières.

15. Procédé selon la revendication 14, **caractérisé en ce que,** pendant la désaldéhydation sous pression, la pression dans le récipient de désaldéhydation (46) est maintenue constante dans la plage du point de rosée sous pression atmosphérique inférieure à 0 °C.

16. Procédé selon l'une des revendications précédentes, **caractérisé en ce que,** après la désaldéhydation, le granulé de matière plastique (16) est amené à un autre tronçon de refroidissement (66) avec un fluide de refroidissement (68), dans lequel le granulé de matière plastique (16) est refroidi jusqu'à moins de 65 °C à une température de fluide de refroidissement inférieure à 40 °C.

17. Procédé selon la revendication 16, **caractérisé en ce que** le fluide de refroidissement (68) présente une densité de chargement supérieure à 30 % en poids de granulés de matière plastique (16) dans l'autre tronçon de refroidissement (66).

18. Procédé selon l'une des revendications précédentes, **caractérisé en ce que** le granulé de matière plastique (16) se compose d'un polyester ou copolyester thermoplastique partiellement cristallisé, par exemple de polyéthylène téréphtalate.
